# EUROPEAN PATENT SPECIFICATION

(11) **EP 2 133 184 B1**
(45) Date of publication and mention of the grant of the patent: **19.01.2011**
(21) Application number: 09162459.3
(22) Date of filing: 10.06.2009
(51) Int. Cl.: B27D 5/00, B32B 3/12, B32B 21/00, E04C 2/34

(54) **Panel of wood or the like, and method and machine for the manufacturing thereof**
Paneel aus Holz oder dergleichen und Verfahren und Maschine zu dessen Herstellung
Panneau de bois ou similaire, et procédé et machine pour la fabrication de celui-ci

(30) Priority: 11.06.2008 IT BO20080371
(43) Date of publication of application: 16.12.2009
(73) Proprietor: BIESSE S.p.A., 61100 Pesaro (IT)
(72) Inventor: Pritelli, Giuseppe, 47033, Cattolica (IT)
(74) Representative: Jorio, Paolo

(56) References cited:
- EP-A- 1 640 128
- EP-A- 1 731 236

## Description

The present invention relates to a panel of wood or the like.

In the wood panel manufacturing field, it is known to make a panel comprising two substantially flat sheets of wood or the like which are parallel to each other; a filling structure normally defined by a honeycomb paper structure arranged between the sheets themselves; a reinforcing structure normally defined by boards made of wood or plastic material having a given thickness and arranged between the sheets and about at least part of the filling structure to ensure better compression strength to the panel at a peripheral edge thereof; and a finishing edge applied along at least part of a side contour of the panel.

The known panels of the above-described type have some drawbacks mainly deriving from that, due to their thickness and rigidity, the mentioned reinforcing boards considerably limit the production capacity of the machines normally used for manufacturing these panels, result in frequent interventions by personnel in charge of loading the reinforcing boards onto the machines themselves, and do not allow, for example, to manufacture panels having a shaped side contour comprising one or more rounded portions having relatively small curvature radiuses.

It is an object of the present invention to provide a panel of wood or the like which is free from the drawbacks set forth above.

According to the present invention, there is provided a panel of wood or the like as claimed in the claims from 1 to 10.

The present invention further relates to a method of manufacturing a panel of wood or the like.

According to the present invention, a method of manufacturing a panel of wood or the like is provided as claimed in the claims from 11 to 24.

Finally, the present invention relates to a machine for manufacturing a panel of wood or the like.

According to the present invention, a machine for manufacturing a panel of wood or the like is provided as claimed in the claims from 25 to 36.

The present invention will now be described with reference to the accompanying drawings, which illustrate a non-limitative embodiment thereof, in which:
figure 1 is a schematic plan view, with parts removed for clarity, of a preferred embodiment of the machine of the present invention;
figure 2 is a first schematic perspective view, with parts removed for clarity, of the machine in figure 1;
figure 3 is a second schematic perspective view, with parts in section and parts removed for clarity, of the machine in figure 1; and
figure 4 is a schematic side view of two variants of a detail of the machine in figures 1, 2, and 3.

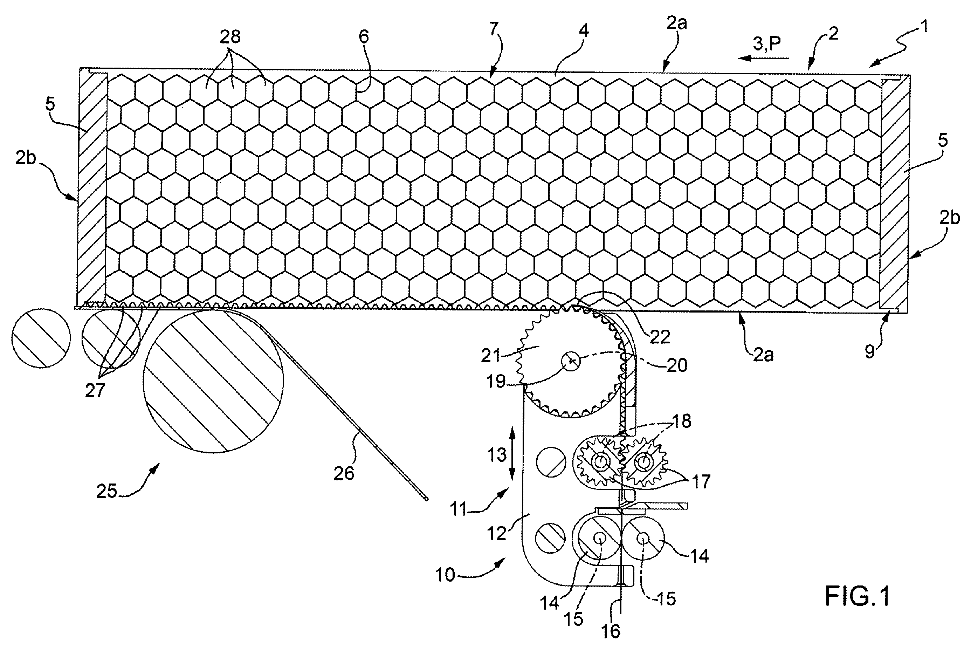

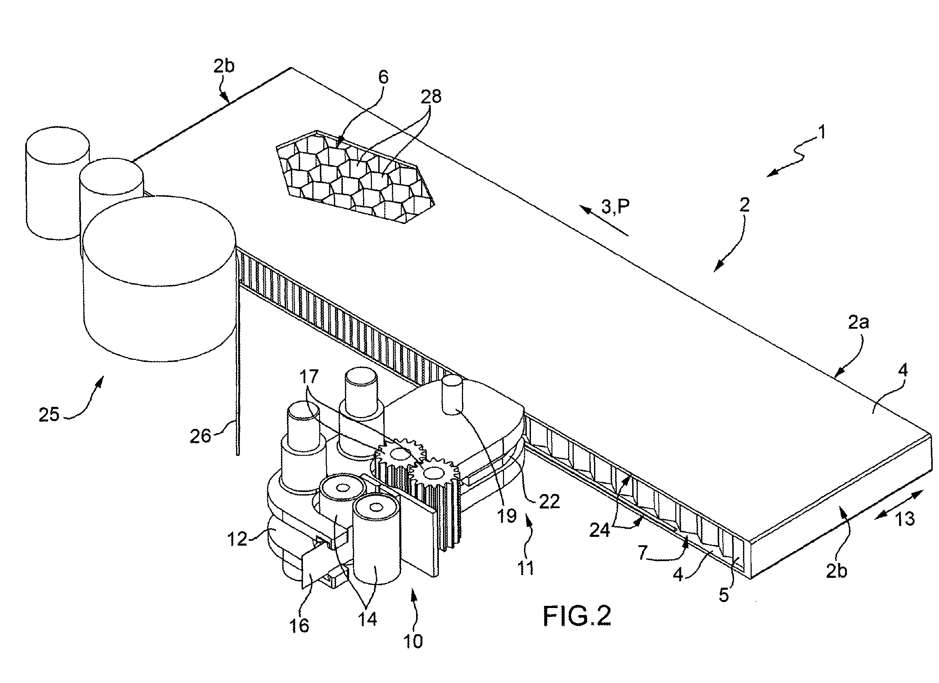

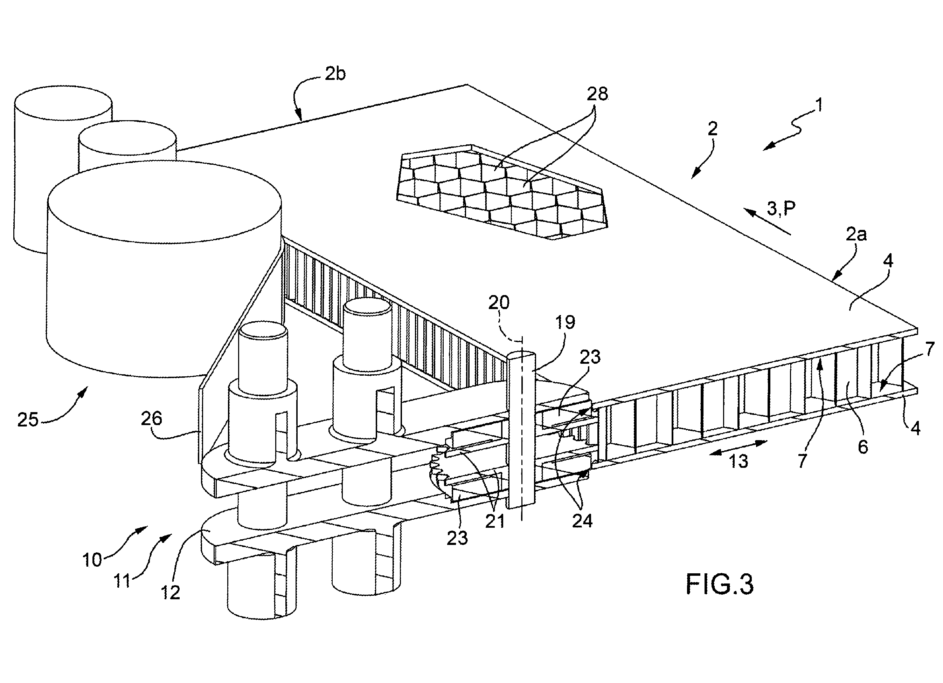

With reference to figures 1, 2, and 3, numeral 1 indicates as a whole an edging machine for edging panels 2 of wood or the like.

In this case, each panel 2 has an elongated rectangular shape, extends in a given direction 3, and is laterally limited by two longitudinal faces 2a parallel to direction 3 and by two transversal faces 2b orthogonal to the direction 3 itself.

Furthermore, panel 2 comprises two substantially flat sheets 4 of wood or the like which are parallel to each other, in this case made of a material derived from wood, such as for example materials commonly indicated by the codes MDF (Medium Density Foam) or HDF (High Density Foam), is longitudinally closed in the direction 3 by two laths 5 of wood or the like mounted between the sheets 4 transversally to direction 3, and is provided with a filling structure 6 (in this case, a honeycomb filling structure e.g. made of cardboard), arranged between the sheets 4 and the laths 5, and glued to the inner surfaces 7 of the sheets 4 themselves.

According to some variants (not shown), the laths 5 are either eliminated or replaced by angular elements of wood or the like arranged at the vertexes of panel 2.

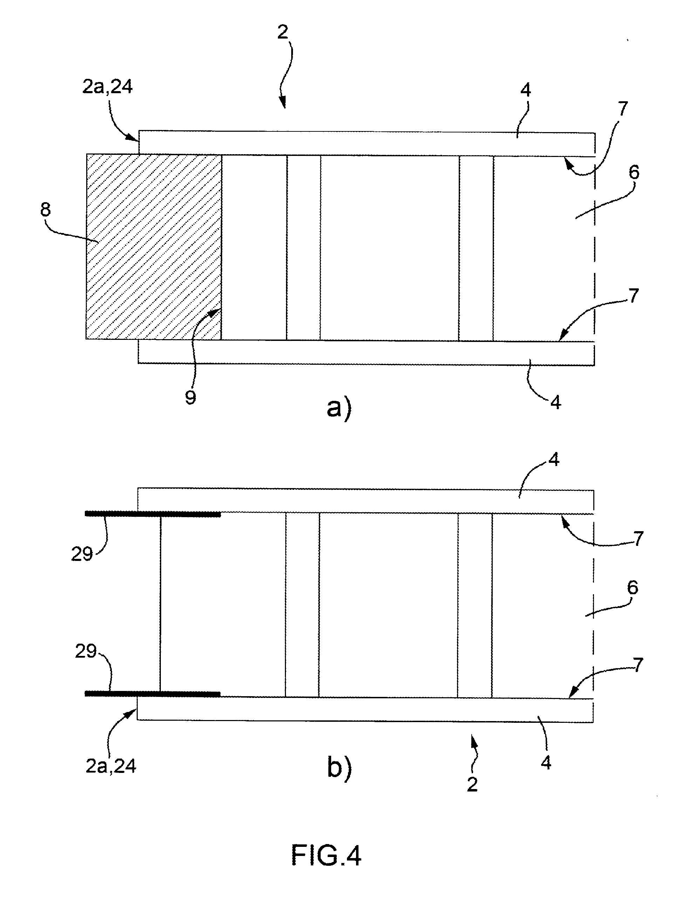

The edging machine 1 comprises a conveying device of known type (not shown) adapted to successively feed the panels 2 in direction 3, along a given path P, and through a cutting station at which a milling head 8 (figure 4a) mills a longitudinal edge of the structure 6 and, in this case, part of an end face of each lath 5 for defining a longitudinal groove 9 parallel to the direction 3 itself.

Panel 2 is then fed in the direction 3 firstly through an applicator device (not shown) adapted to apply glue onto the inner surfaces 7 at the groove 9 and then through a machining station 10 provided with a machining assembly 11 mounted by the side of the path P and comprising a supporting slide 12, which extends in a horizontal direction 13 transversal to direction 3, and supports a pair of unwinding rollers 14, which are mounted on slide 12 so as to rotate about respective longitudinal axes 15, substantially vertical and orthogonal to directions 3 and 13, are arranged on opposite sides of a flat strip 16, and are an idle presser roller and a motorized roller, respectively.

Strip 16 is made of a flexible material (aluminium, in this case), extends on a plane which is substantially vertical and orthogonal to the sheets 4, and has a height substantially equal to a height of structure 6.

By means of the rollers 14, the strip 16 is firstly unwound from a reel (not shown) and is then fed through a pair of toothed corrugating rollers 17, which are mounted on the slide 12 so as to rotate about respective longitudinal axes 12 which are parallel to one another and to the axes 15, and are shaped so as to permanently deform the strip 16 and confer a substantially trapezoidal-shaped, corrugated profile to the strip 16 itself.

The assembly 11 further comprises a supporting shaft 19, which is mounted through the slide 12 so as to rotate in phase with the rollers 17 about a longitudinal axis 20 thereof, which is parallel to the axes 15 and 18, and carries two toothed inserting discs 21 fitted thereon, which have respective external toothings adapted to couple with the corrugated profile of strip 16, are arranged to be spaced from each other by a distance shorter than the distance between the two sheets 4, and extend between the sheets 4 themselves to insert the corrugated strip 16 into the groove 9.

The insertion of the corrugated strip 16 between the sheets 4 is selectively controlled by a stroke-end, metal foil 22, which is connected to the slide 12, extends about the axis 20 between the filling structure 6 and the corrugated strip 16, and is arranged at an adjustable distance from axis 20 so that the strip 16 is entirely contained between the sheets 4 or protrudes from the sheets 4 themselves in the direction 13.

Furthermore, the slide 12 is slidingly coupled to a fixed frame (not shown) of the edging machine 1 to make rectilinear movements in direction 13, and supports two copying discs 23, which are mounted on the shaft 19 coaxially to the axis 20 and on opposite sides of the discs 21, are pivotally coupled to the shaft 19 itself, and are kept, in use, in contact with the two smaller side faces 24 of the sheets 4 by means of a damping device (not shown) interposed between the slide 12 and the mentioned frame (not shown) of the edging machine 1.

Finally, the edging machine 1 comprises an edging assembly 25 of known type mounted downstream of the machining assembly 11 in the direction 3 for selectively applying glue on a finishing edge 26 or longitudinal face 2a of the panel 2, applying the edge 26 on the face 2a itself, and separating the edge 26 from a strip of known type (not shown).

Edge 26 is glued both on the laths 5 and the corrugated strip 16 so as to define, along with the profile of the corrugated strip 16, a sequence of tubular elements 27, which orthogonally extend to the sheets 4, and each has a respective transversal section smaller than the transversal section of a tubular element 28 of the honeycomb filling structure 6 so as to confer a relatively high compression strength to the peripheral edge of the panel 2.

The edging machine 1 may obviously be shaped to simultaneously apply the corrugated reinforcing strip 16 and the finishing edge 26 at both longitudinal faces 2a of panel 2.

When the laths 5 are either eliminated or replaced bu the mentioned angular elements (not shown), the corrugated reinforcing strip 16 and the finishing edge 26 are obviously applied at both the longitudinal faces 2a and the transversal faces 2b.

According to a variant (not shown), the finishing edge is obtained by extruding a plastic material along the faces 2a and/or 2b. In this case, the corrugated strip 16 defines a containing barrier for the extruded plastic material.

The variant in figure 4b merely differs from the illustration of the previous figures in that, in this case, the milling head 8 is eliminated and replaced by two cutting blades 29, which extend between the sheets 4 in direction 13, are spaced apart by a distance which is substantially equal to the height of the filling structure 6, and are adapted to separate a portion of the structure 6 from the sheets 4 themselves. The portion of structure 6 separated from the sheets 4 is thus deformed by compression in the direction 13 upon the insertion of the corrugated reinforcing strip 16 between the sheets 4.

The flexibility and relatively small thickness of the strip 16 allow the use of reels (not shown) provided with relatively large amounts of strip 16, thus ensuring a relatively high production capacity to the edging machine 1 between two interventions for replacing the reels themselves (not shown), and allow the edging machine 1 to machine panels 2 having shaped side contours displaying rounded portions having relatively small curvature radiuses.

## Claims

1. A panel of wood or the like comprising two substantially flat sheets (4) of wood or the like which are parallel to each other; and a filling structure (6) arranged between the sheets (4) themselves; and **characterized in that** it further comprises a corrugated reinforcing strip (16) mounted between the sheets (4) and about at least part of the filling structure (6).

2. A panel according to claim 1, wherein the corrugated reinforcing strip (16) is mounted perpendicularly to the said sheets (4).

3. A panel according to claim 1 or 2, wherein the corrugated reinforcing strip (16) has a substantially trapezoidal profile.

4. A panel according to any one of the preceding claims and further comprising a finishing edge (26) applied along at least part of a side contour (2a, 2b) of the panel itself.

5. A panel according to claim 4, wherein the finishing edge (26) is connected both to the smaller side faces (24) of said sheets (4) and to the corrugated reinforcing strip (16).

6. A panel according to claim 4 or 5, wherein the finishing edge (26) is obtained from a strip.

7. A panel according to claim 4 or 5, wherein the finishing edge (26) is defined by a plastic material extruded onto the panel itself.

8. A panel according to any one of the preceding claims, wherein the corrugated reinforcing strip (16) has a height, measured perpendicularly to said sheets (4), which is substantially equal to a height of the filling structure (6), also measured perpendicularly to said sheets (4).

9. A panel according to any one of the preceding claims and further comprising at least one reinforcing lath (5) of wood or the like mounted between said sheets (4) and about part of the filling structure (6).

10. A panel according to any one of the preceding claims and further having a shaped side contour (2a, 2b) comprising at least one rounded portion.

11. A method of machining a panel (2) of wood or the like comprising two substantially flat sheets (4) of wood or the like which are parallel to each other and a filling structure (6) arranged between the sheets (4) themselves, the method being **characterized in that** it comprises the step of:
inserting a corrugated reinforcing strip (16) between said sheets (4) and about at least part of the filling structure (6).

12. A method according to claim 11, wherein the corrugated reinforcing strip (16) is inserted between said sheets (4) perpendicularly to the sheets (4) themselves.

13. A method according to claim 11 or 12 and further comprising the step of:
shaping the corrugated reinforcing strip (16) from an initial flat configuration thereof.

14. A method according to any one of the claims from 11 to 13 and further comprising the step of:
milling part of the filling structure (6) to define a groove (9) for accommodating the corrugated reinforcing strip (16).

15. A method according to any one of the claims from 11 to 13 and further comprising the steps of:
inserting at least one reinforcing lath (5) between said sheets (4) and about part of the filling structure (6); and
milling part of the filling structure (6) and the reinforcing lath to define a groove (9) for accommodating the corrugated reinforcing strip (16).

16. A method according to any one of the claims from 11 to 13 and further comprising the steps of:
separating part of the filling structure (6) from said sheets (4); and
inserting the corrugated reinforcing strip (16) between the sheets (4) so as to compress the part of the filling structure (6) separated from the sheets (4) themselves.

17. A method according to any one of the claims from 11 to 16 and further comprising the steps of:
applying glue onto the reciprocally facing inner surfaces (7) of said sheets (4); and
gluing the corrugated reinforcing strip (16) onto the sheets (4) themselves.

18. A method according to any one of the claims from 11 to 17, wherein the corrugated reinforcing strip (16) is inserted between said sheets (4) so as to be entirely contained between the sheets (4) themselves.

19. A method according to any one of the claims from 11 to 17, wherein the corrugated reinforcing strip (16) is inserted between said sheets (4) so as to protrude from the smaller side faces (24) of the sheets (4) themselves.

20. A method according to any one of the claims from 11 to 19 and further comprising the step of:
inserting a stroke-end element (22) between the filling structure (6) and the corrugated reinforcing strip (16) for selectively controlling an insertion depth of the corrugated strip (16) between said sheets (4).

21. A method according to any one of the claims from 11 to 20 and further comprising the step of:
applying a finishing edge (26) along at least part of a side contour (2a, 2b) of the panel (2).

22. A method according to claim 21 and further comprising the step of:
connecting the finishing edge (26) both to the smaller side faces (24) of said sheets (4) and to the corrugated reinforcing strip (16).

23. A method according to claim 21 or 22 and further comprising the step of:
separating the finishing edge (26) from a strip.

24. A method according to claim 21 or 22 and further comprising the step of:
extruding the finishing edge (26) on the panel (2).

25. A machine for machining a panel (2) of wood or the like comprising two substantially flat sheets (4) of wood or the like which are parallel to each other, and a filling structure (6) arranged between the sheets (4) themselves, the machine being and **characterized in that** it comprises a feeding device (11) for inserting a corrugated reinforcing strip (16) between said sheets (4) and about at least part of the filling structure (6).

26. A machine according to claim 25 and further comprising a corrugating device (17) for shaping the corrugated reinforcing strip (16) from an initial flat configuration thereof.

27. A machine according to claim 25 or 26 and further comprising a machining head (8) for milling part of the filling structure (6) and defining a groove (9) for accommodating the corrugated reinforcing strip (16).

28. A machine according to claim 25 or 26, wherein the panel (2) further comprises at least one reinforcing lath (5) arranged between said sheets (4) and about part of the filling structure (6); a machining head (8) being included for milling part of the filling structure (6) and the reinforcing lath (5), and defining a groove (9) for accommodating the corrugated reinforcing strip (16).

29. A machine according to claim 25 or 26 and further comprising a cutting device (29) for separating part of the filling structure (6) from said sheets (4); the feeding device (11) being adapted to insert the corrugated reinforcing strip (16) between the sheets (4) so as to compress the part of the filling structure (6) separated from the sheets (4) themselves.

30. A machine according to any one of the claims from 25 to 29 and further comprising an applicator device for applying glue on the reciprocally facing inner surfaces (7) of said sheets (4).

31. A machine according to any one of the claims from 25 to 30 and further comprising a stroke-end element (22) arranged, in use, between the filling structure (6) and the corrugated reinforcing strip (16) to limit the insertion depth of the corrugated strip (16) between said sheets (4).

32. A machine according to any one of the claims from 25 to 31 and further comprising an edging device (25) for applying a finishing edge (26) along at least part of a side contour (2a, 2b) of the panel (2).

33. A machine according to claim 32 and further comprising a cutting device for separating the finishing edge (26) from a strip.

34. A machine according to claim 32 and further comprising an extruder device for extruding the finishing edge (26) onto the panel (2).

35. A machine according to any one of the claims from 25 to 34, wherein the feeding device (11) comprises at least one toothed insertion disc (21), which is shaped so as to couple with the corrugated reinforcing strip (16), and extends between said sheets (4) to insert the corrugated reinforcing strip (16) between the sheets (4) themselves.

36. A machine according to any one of the claims from 25 to 35, wherein the feeding device (11) further comprises copying means (23) for following a profile of the smaller side faces (24) of said sheets (4) in use.

## Patentansprüche

1. Ein Paneel aus Holz oder dergleichen, das zwei im wesentlichen flache Schichten (4) aus Holz oder dergleichen umfasst, die parallel zueinander liegen; und eine Füllstruktur (6), die zwischen den Schichten (4) selbst angeordnet ist; und **gekennzeichnet dadurch, dass** es ferner einen geriffelten Verstärkungsstreifen (16) umfasst, der zwischen die Schichten (4) und über wenigstens einen Teil der Füllstruktur (6) montiert ist.

2. Ein Paneel gemäß Anspruch 1, bei dem der geriffelte Verstärkungsstreifen (16) rechtwinklig zu den genannten Schichten (4) montiert ist.

3. Ein Paneel gemäß Anspruch 1 oder 2, bei dem der geriffelte Verstärkungsstreifen (16) ein im wesentlichen trapezförmiges Profil hat.

4. Ein Paneel gemäß einem der vorhergehenden Ansprüche, der dazu eine Abschlusskante (26) hat, die entlang wenigstens eines Teils einer Seitenfläche (2a, 2b) des Paneels selbst angebracht ist.

5. Ein Paneel gemäß Anspruch 4, bei dem die Abschlusskante (26) sowohl mit den kleineren Seitenflächen (24) der genannten Schichten als auch mit dem geriffelten Verstärkungsstreifen (16) verbunden ist.

6. Ein Paneel gemäß Anspruch 4 oder 5, bei dem die Abschlusskante (26) aus einem Streifen erhalten wird.

7. Ein Paneel gemäß Anspruch 4 oder 5, bei dem die Abschlusskante (26) aus Kunststoffmaterial besteht, welches auf das Paneel selbst extrudiert ist.

8. Ein Paneel gemäß einem der vorhergehenden Ansprüche, bei dem der geriffelte Verstärkungsstreifen (16) eine Höhe hat, die rechtwinklig zu den genannten Schichten (4) gemessen, im wesentlichen einer Höhe der Füllstruktur (6) entspricht, die ebenfalls rechtwinklig zu den genannten Schichten (4) gemessen ist.

9. Ein Paneel gemäß einem der vorhergehenden Ansprüche, das darüber hinaus mindestens eine Verstärkungsleiste (5) aus Holz oder dergleichen umfasst, die zwischen die genannten Schichten (4) und über einen Teil der Füllstruktur (6) montiert ist.

10. Ein Paneel gemäß einem der vorhergehenden Ansprüche, das darüber hinaus eine geformte Seitenkontur (2a, 2b) hat, die wenigstens einen gerundeten Abschnitt umfasst.

11. Ein Verfahren zum Bearbeiten eines Panels (2) aus Holz oder dergleichen, welches zwei im wesentlichen flache Schichten (4) aus Holz oder dergleichen umfasst, die parallel zueinander sind und einer Füllstruktur (6), die zwischen den Schichten (4) selbst angeordnet ist, wobei das Verfahren **dadurch gekennzeichnet ist, dass** es den folgenden Schritt umfasst:
Einführen eines geriffelten Verstärkungsstreifens (16) zwischen die genannten Schichten (4) und über wenigstens einen Teil der Füllstruktur (6).

12. Ein Verfahren gemäß Anspruch 11, bei dem der geriffelte Verstärkungsstreifen (16) zwischen die genannten Schichten (4) eingesetzt wird, rechtwinklig zu den Schichten(4) selbst.

13. Ein Verfahren gemäß Anspruch 11 oder 12, das darüber hinaus den folgenden Schritt umfasst:
Formen des geriffelten Verstärkungsstreifens (16) aus einer ursprünglich flachen Ausführung.

14. Ein Verfahren gemäß einem Ansprüche 11 bis 13, das darüber hinaus den folgenden Schritt umfasst:
Fräsen eines Teils der Füllstruktur (6), um eine Nut (9) zum Aufnehmen des geriffelten Verstärkungsstreifens (16) zu bilden.

15. Ein Verfahren gemäß einem Ansprüche 11 bis 13, das darüber hinaus die folgenden Schritte umfasst:
Einsetzen mindestens einer Verstärkungsleiste (5) zwischen die genannten Schichten (4) und über einen Teil der Füllstruktur (6); und
Fräsen eines Teils der Füllstruktur (6) und der Verstärkungsleiste (5) um eine Nut (9) zum Aufnehmen des geriffelten Verstärkungsstreifens (16) zu bilden.

16. Ein Verfahren gemäß einem Ansprüche 11 bis 13, das darüber hinaus die folgenden Schritte umfasst:
Abtrennen eines Teils der Füllstruktur (16) von den genannten Schichten (4) und ;
Einführen des geriffelten Verstärkungsstreifens (16) zwischen die Schichten (4), so dass der von den Schichten (4) abgetrennte Teil der Füllstruktur (6) zusammengepresst wird.

17. Ein Verfahren gemäß einem Ansprüche 11 bis 16, das darüber hinaus die folgenden Schritte umfasst:
Auftragen eines Leims auf die sich gegenseitig gegenüberstehenden inneren Oberflächen (7) der genannten Schichten (4); und
Verleimen des geriffelten Verstärkungsstreifens (16) auf die Schichten (4) selber.

18. Ein Verfahren gemäß einem Ansprüche 11 bis 17, bei welchem der geriffelte Verstärkungsstreifen (16) zwischen die genannten Schichten (4) eingeführt wird, so dass er vollständig zwischen den genannten Schichten (4) eingeschlossen ist.

19. Ein Verfahren gemäß einem Ansprüche 11 bis 17, bei welchem der geriffelte Verstärkungsstreifen (16) zwischen die genannten Schichten (4) eingeführt wird, so dass er aus den kleineren Seitenflächen (24) der Schichten (4) hervorragt.

20. Ein Verfahren gemäß einem Ansprüche 11 bis 19, das darüber hinaus den folgenden Schritt umfasst:
Einsetzen eines Hubendelementes (22) zwischen die Füllstruktur (6) und
den geriffelten Verstärkungsstreifen (16) zum wahlweisen Steuern einer Einführungstiefe des geriffelten Verstärkungsstreifens (16) zwischen die genannten Schichten (4).

21. Ein Verfahren gemäß einem Ansprüche 11 bis 20, das darüber hinaus den folgenden Schritt umfasst:
Anfügen einer Abschlusskante (26) entlang wenigstens eines Teils einer Seitenkontur (2a, 2b) des Paneels (2).

22. Ein Verfahren gemäß Anspruch 21, das darüber hinaus den folgenden Schritt umfasst:
Verbinden der Abschlusskante (26) sowohl mit den kleineren Seitenflächen (24) der genannten Schichten (4) als auch mit dem geriffelten Verstärkungsstreifen (16).

23. Ein Verfahren gemäß Anspruch 21 oder 22, das darüber hinaus den folgenden Schritt umfasst:
Abtrennen der Abschlusskante (26) von einem Streifen.

24. Ein Verfahren gemäß Anspruch 21 oder 22, das darüber hinaus den folgenden Schritt umfasst:
Extrudieren der Abschlusskante (26) auf das Paneel (2).

25. Eine Maschine zum Bearbeiten eines Paneels (2) aus Holz oder dergleichen, das zwei im wesentlichen flache Schichten (4) aus Holz oder dergleichen umfasst, die parallel zueinander liegen; und eine Füllstruktur (6), die zwischen den Schichten (4) selbst angeordnet ist, wobei die Maschine **dadurch gekennzeichnet ist, dass** sie eine Einführungsvorrichtung (11) zum Einführen eines geriffelten Verstärkungsstreifens (16) zwischen die genannten Schichten (4) und über wenigstens einen Teil der Füllstruktur (6) umfasst.

26. Eine Maschine gemäß Anspruch 25, die darüber hinaus zum Formen des geriffelten Verstärkungsstreifens (16) aus einer ursprünglich flachen Ausführung eine Riffelungsvorrichtung (17) umfasst.

27. Eine Maschine gemäß Anspruch 25 oder 26, die darüber hinaus einen Bearbeitungskopf (8) umfasst, zum Ausfräsen eines Teils der Füllstruktur (6) und zum Bilden einer Nut (9) zum Aufnehmen des geriffelten Verstärkungsstreifens (16).

28. Eine Maschine gemäß Anspruch 25 oder 26, wobei das Paneel (2) darüber hinaus wenigstens eine Verstärkungsleiste (5) umfasst, die zwischen den Schichten (4) und über einem Teil der Füllstruktur (6) angeordnet ist; einen Bearbeitungskopf (8), zum Ausfräsen eines Teils der Füllstruktur (6) und der Verstärkungsleiste (5) und zum Bilden einer Nut (9) zum Aufnehmen des geriffelten Verstärkungsstreifens (16).

29. Eine Maschine gemäß Anspruch 25 oder 26, die darüber hinaus eine Schneidevorrichtung (29) zum Abtrennen eines teils der Füllstruktur (6) von den genannten Schichten (4) umfasst; wobei die Einführungsvorrichtung (11) angepasst ist, um den geriffelten Verstärkungsstreifen (16) zwischen die Schichten (4) einzuführen, um so den Teil der Füllstruktur (6), der von den Schichten (4) abgetrennt ist, zusammenzupressen.

30. Eine Maschine gemäß einem der Ansprüche 25 bis 29, die darüber hinaus eine Applikationsvorrichtung zum Auftragen von Leim auf die sich gegenseitig gegenüberliegenden Innenflächen (7) der genannten Schichten (4) umfasst.

31. Eine Maschine gemäß einem der Ansprüche 25 bis 30, die darüber hinaus ein Hubendelement (22) umfasst, das bei Gebrauch zwischen der Füllstruktur (6) und dem geriffelten Verstärkungsstreifen (16) platziert ist, um die Einführungstiefe des geriffelten Verstärkungsstreifens (16) zwischen den genannten Schichten (4) zu begrenzen.

32. Eine Maschine gemäß einem der Ansprüche 25 bis 31, die darüber hinaus eine Abkantungsvorrichtung (25) zum Auftragen einer Abschlusskante (26) entlang wenigstens eines Teils einer Seitenkontur (2a, 2b) des Paneels (2) umfasst.

33. Eine Maschine gemäß Anspruch 32, die darüber hinaus eine Schneidevorrichtung zum Abtrennen der Abschlusskante (26) von einem Streifen umfasst.

34. Eine Maschine gemäß Anspruch 32, die darüber hinaus eine Extrudiervorrichtung zum Extrudieren der Abschlusskante (26) auf das Paneel (2) umfasst.

35. Eine Maschine gemäß einem der Ansprüche 25 bis 34, bei der die Einführungsvorrichtung (11) mindestens eine gezahnte Einsatzscheibe (21) umfasst, die so geformt ist, dass sie sich mit dem geriffelten Verstärkungsstreifen (16) verkuppelt und sich zwischen den genannten Schichten (4) erstreckt, um den geriffelten Verstärkungsstreifen (16) zwischen die Schichten (4) selbst einzusetzen.

36. Eine Maschine gemäß einem der Ansprüche 25 bis 35, bei der die Einführungsvorrichtung (11) darüber hinaus Nachführungsmittel (23) umfasst, um im Gebrauch einem Profil der kleineren Seitenflächen (24) der genannten Schichten (4) zu folgen.

## Revendications

1. Un panneau en bois ou équivalent comprenant deux feuilles (4) sensiblement plates en bois ou équivalent qui sont parallèles l'une à l'autre; et une structure de remplissage (6) disposée entre les feuilles (4) elles-mêmes; et **caractérisé en ce qu'**il comprend en outre une bande de renfort ondulée (16) montée entre les feuilles (4) et autour d'au moins une partie de la structure de remplissage (6).

2. Panneau selon la revendication 1, dans lequel la bande de renfort ondulée (16) est montée perpendiculairement auxdites feuilles (4).

3. Panneau selon la revendication 1 ou 2, dans lequel la bande de renfort ondulée (16) a un profil sensiblement trapézoïdal.

4. Panneau selon l'une quelconque des revendications précédentes, comprenant en outre un bord de finition (26) appliqué le long d'au moins une partie d'un contour latéral (2a, 2b) du panneau lui-même.

5. Panneau selon la revendication 4, dans lequel le bord de finition (26) est relié à la fois aux faces de plus petit côté (24) desdites feuilles (4) et à la bande de renfort ondulée (16).

6. Panneau selon la revendication 4 ou 5, dans lequel le bord de finition (26) est obtenu à partir d'une bande.

7. Panneau selon la revendication 4 ou 5, dans lequel le bord de finition (26) est défini par un matériau plastique extrudé sur le panneau lui-même.

8. Panneau selon l'une quelconque des revendications précédentes, dans lequel la bande de renfort ondulée (16) a une hauteur, mesurée perpendiculairement auxdites feuilles (4), qui est sensiblement égale à une hauteur de la structure de remplissage (6), également mesurée perpendiculairement auxdites feuilles (4).

9. Panneau selon l'une quelconque des revendications précédentes, comprenant en outre au moins une latte de renfort (5) en bois ou équivalent montée entre lesdites feuilles (4) et autour d'une partie de la structure de remplissage (6).

10. Panneau selon l'une quelconque des revendications précédentes, ayant en outre un contour latéral formé (2a, 2b) comprenant au moins une portion arrondie.

11. Un procédé d'usinage d'un panneau (2) en bois ou équivalent comprenant deux feuilles (4) sensiblement plates en bois ou équivalent qui sont parallèles l'une à l'autre et une structure de remplissage (6) disposée entre les feuilles (4) elles-mêmes, le procédé étant **caractérisé en ce qu'**il comprend l'étape consistant à :
insérer une bande de renfort ondulée (16) entre lesdites feuilles (4) et autour d'au moins une partie de la structure de remplissage (6).

12. Procédé selon la revendication 11, dans lequel la bande de renfort ondulée (16) est insérée entre lesdites feuilles (4) perpendiculairement aux feuilles (4) elles-mêmes.

13. Procédé selon la revendication 11 ou 12, comprenant en outre l'étape consistant à :
former la bande de renfort ondulée (16) à partir d'une configuration plate initiale de celle-ci.

14. Procédé selon l'une quelconque des revendications 11 à 13, comprenant en outre l'étape consistant à :
fraiser une partie de la structure de remplissage (6) afin de définir une rainure (9) pour loger la bande de renfort ondulée (16).

15. Procédé selon l'une quelconque des revendications 11 à 13, comprenant en outre les étapes consistant à :
insérer au moins une latte de renfort (5) entre lesdites feuilles (4) et autour d'une partie de la structure de remplissage (6) ; et fraiser une partie de la structure de remplissage (6) et la latte de renfort afin de définir une rainure (9) pour loger la bande de renfort ondulée (16).

16. Procédé selon l'une quelconque des revendications 11 à 13, comprenant en outre les étapes consistant à :
séparer une partie de la structure de remplissage (6) desdites feuilles (4) ; et
insérer la bande de renfort ondulée (16) entre les feuilles (4) de manière à comprimer la partie de la structure de remplissage (6) séparée des feuilles (4) elles-mêmes.

17. Procédé selon l'une quelconque des revendications 11 à 16, comprenant en outre les étapes consistant à :
appliquer de la colle sur les surfaces intérieures mutuellement opposées (7) desdites feuilles (4) ; et
coller la bande de renfort ondulée (16) sur les feuilles (4) elles-mêmes.

18. Procédé selon l'une quelconque des revendications 11 à 17, dans lequel la bande de renfort ondulée (16) est insérée entre lesdites feuilles (4) de manière à être entièrement contenue entre les feuilles (4) elles-mêmes.

19. Procédé selon l'une quelconque des revendications 11 à 17, dans lequel la bande de renfort ondulée (16) est insérée entre lesdites feuilles (4) de manière à dépasser des faces de plus petit côté (24) des feuilles (4) elles-mêmes.

20. Procédé selon l'une quelconque des revendications 11 à 19, comprenant en outre l'étape consistant à :
insérer un élément de fin de course (22) entre la structure de remplissage (6) et la bande de renfort ondulée (16) pour contrôler sélectivement une profondeur d'insertion de la bande ondulée (16) entre lesdites feuilles (4).

21. Procédé selon l'une quelconque des revendications 11 à 20, comprenant en outre l'étape consistant à : appliquer un bord de finition (26) le long d'au moins une partie d'un contour latéral (2a, 2b) du panneau (2).

22. Procédé selon la revendication 21, comprenant en outre l'étape consistant à :
relier le bord de finition (26) à la fois aux faces de plus petit côté (24) desdites feuilles (4) et à la bande de renfort ondulée (16).

23. Procédé selon la revendication 21 ou 22, comprenant en outre l'étape consistant à :
séparer le bord de finition (26) d'une bande.

24. Procédé selon la revendication 21 ou 22, comprenant en outre l'étape consistant à :
extruder le bord de finition (26) sur le panneau (2).

25. Une machine pour usiner un panneau (2) en bois ou équivalent comprenant deux feuilles (4) sensiblement plates en bois ou équivalent qui sont parallèles l'une à l'autre, et une structure de remplissage (6) disposée entre les feuilles (4) elles-mêmes, la machine étant **caractérisée en ce qu'**elle comprend un dispositif d'alimentation (11) pour insérer une bande de renfort ondulée (16) entre lesdites feuilles (4) et autour d'au moins une partie de la structure de remplissage (6).

26. Machine selon la revendication 25, comprenant en outre un dispositif de formation d'ondulations (17) pour former la bande de renfort ondulée (16) à partir d'une configuration plate initiale de celle-ci.

27. Machine selon la revendication 25 ou 26, comprenant en outre une tête d'usinage (8) pour fraiser une partie de la structure de remplissage (6) et définir une rainure (9) pour loger la bande de renfort ondulée (16).

28. Machine selon la revendication 25 ou 26, dans laquelle le panneau (2) comprend en outre au moins une latte de renfort (5) disposée entre lesdites feuilles (4) et autour d'une partie de la structure de remplissage (6) ; une tête d'usinage (8) étant incluse pour fraiser une partie de la structure de remplissage (6) et de la latte de renfort (5), et définissant une rainure (9) pour loger la bande de renfort ondulée (16).

29. Machine selon la revendication 25 ou 26, comprenant en outre un dispositif de découpe (29) pour séparer une partie de la structure de remplissage (6) desdites feuilles (4), le dispositif d'alimentation (11) étant adapté pour insérer la bande de renfort ondulée (16) entre les feuilles (4) de manière à comprimer la partie de la structure de remplissage (6) séparée des feuilles (4) elles-mêmes.

30. Machine selon l'une quelconque des revendications 25 à 29, comprenant en outre un dispositif d'application pour appliquer de la colle sur les surfaces intérieures mutuellement opposées (7) desdites feuilles (4).

31. Machine selon l'une quelconque des revendications 25 à 30, comprenant en outre un élément de fin de course (22) disposé, en fonctionnement, entre la structure de remplissage (6) et la bande de renfort ondulée (16) pour limiter la profondeur d'insertion de la bande ondulée (16) entre lesdites feuilles (4).

32. Machine selon l'une quelconque des revendications 25 à 31, comprenant en outre un dispositif à border (25) pour appliquer un bord de finition (26) le long d'au moins une partie d'un contour latéral (2a, 2b) du panneau (2).

33. Machine selon la revendication 32, comprenant en outre un dispositif de découpe pour séparer le bord de finition (26) d'une bande.

34. Machine selon la revendication 32, comprenant en outre un dispositif d'extrusion pour extruder le bord de finition (26) sur le panneau (2).

35. Machine selon l'une quelconque des revendications 25 à 34, dans laquelle le dispositif d'alimentation (11) comprend au moins un disque d'insertion dentée (21), qui est formé de manière à se coupler à la bande de renfort ondulée (16) et s'étend entre lesdites feuilles (4) pour insérer la bande de renfort ondulée (16) entre les feuilles (4) elles-mêmes.

36. Machine selon l'une quelconque des revendications 25 à 35, dans laquelle le dispositif d'alimentation (11) comprend en outre un moyen de copie (23) pour suivre un profil des faces de plus petit côté (24) desdites feuilles (4) en fonctionnement.
